# EUROPEAN PATENT APPLICATION

(11) **EP 4 563 658 A1**
(43) Date of publication of application: **04.06.2025**
(21) Application number: 23846561.1
(22) Date of filing: 26.07.2023
(51) Int. Cl.: C08L 77/00, B29B 9/12, C08J 3/20, C08J 11/06, C08L 101/00, D01F 6/60

(54) **RECYCLED POLYAMIDE RESIN COMPOSITION**

(30) Priority: 26.07.2022 JP 2022118450
(71) Applicant: UBE Corporation, Ube-shi, Yamaguchi 755-8633 (JP)
(72) Inventor: FUJINO, Hiroshi, Ube-shi, Yamaguchi 755-8633 (JP); ONO, Keitarou, Ube-shi, Yamaguchi 755-8633 (JP)
(74) Representative: Hoffmann Eitle
(86) International application number: PCT/JP2023/027359
(87) International publication number: WO 2024/024831

(57) **Abstract**

The present invention relates to a recycled polyamide resin composition obtained by melt-kneading a polyamide resin (a) or a polyamide resin composition (A) containing the polyamide resin (a) as a main component, and a polyamide-based resin waste material (B), in which the polyamide-based resin waste material (B) comprises a polyamide resin (b1) and a thermoplastic resin (b2) other than a polyamide resin, more than 0% by mass and 2.00% by mass or less of the thermoplastic resin (b2) other than a polyamide resin is comprised in 100% by mass of the polyamide-based resin waste material (B), and 2% by mass or more and less than 50% by mass of the polyamide-based resin waste material (B) is comprised in 100% by mass of the recycled polyamide resin composition. The recycled polyamide resin composition of the present invention can contribute to SDGs (Sustainable Development Goals).

## Description

### Technical Field

The present invention relates to a recycled polyamide resin composition.

### Background Art

In recent years, reduction of plastic waste has been demanded according to enhancement of SDGs (Sustainable Development Goals).

For example, fishing nets, when left as they are in nature, may wrap around living things such as fishes and birds, and/or may serve as microplastics to contaminate the ocean. In addition, fishing nets, even when appropriately disposed, lead to increase of plastic waste.

Fishing nets are often made of compositions mainly containing polyamide resins. Patent Literature 1 discloses a fishing net recycling method for providing a high-quality recycled pellet, the method including cutting, pulverizing, and pelletizing a fishing net.

Patent Literature 2 discloses a recycled polyamide for molding, including a polyamide monofilament waste material fiber and a polyamide resin composition mixed, in which the polyamide resin composition used here is one obtained by mixing a polyamide resin lower in mass average molecular weight than the waste material fiber, and a glass fiber.

Patent Literature 3 discloses stabilization by combining and compounding at least one compound reactive with a carbonyl group and an antioxidant with recycled thermoplastics.

### Citation List

### Patent Literature

[Patent Literature 1] Japanese Patent No. 6935963
[Patent Literature 2] Japanese Patent Laid-Open No. 2004-18614
[Patent Literature 3] Japanese Translation of PCT International Application Publication No. 2022-518047

### Summary of Invention

### Technical Problem

Waste material compositions, even when based on polyamides, usually comprise unintended components including other thermoplastic resins and/or color materials. Physical properties of recycled resin compositions are considered to be varied depending on the make up of such recycled resin compositions, and are affected by the make up of waste material compositions. Physical properties of recycled resin compositions are also considered to be affected by the proportion of waste material compositions contained in such recycled resin compositions. However, neither the make up of waste material compositions, nor the make up of recycled resin compositions have been studied in Patent Literatures 1 to 3.

Polyamide resins and compositions thereof are characterized by being excellent in tensile characteristics including tensile strength and tensile elastic modulus. Recycled resin compositions are desired to have compositional ratios by use of waste material compositions so that tensile characteristics of polyamide resins and compositions thereof are not impaired or are enhanced.

Furthermore, recycled resin compositions are to be used in molded articles and therefore are demanded to have moldability. Monofilaments to be used for lawn mowing code, fishing nets, fishing lines, and the like are desired to not only have mechanical strength, but also have certain flexibility.

An object of the present invention is to provide a raw polyamide resin composition which, even when comprising a waste material composition, is not only enhanced in tensile elastic modulus, but also favorable in moldability, as compared with a case of no waste material composition comprised.

### Solution to Problem

The present inventors have found that a recycled polyamide resin composition in which the amount of a polyamide-based resin waste material (B) and the amount of a thermoplastic resin (b2) other than a polyamide resin, as an unintended component comprised in the polyamide-based resin waste material (B), are set in specified ranges maintains tensile strength and tensile elastic modulus comparable with those of a polyamide resin composition including no waste material, and can be utilized as a recycled polyamide resin composition and thus can contribute to SDGs (Sustainable Development Goals), thereby leading to completion of the present invention.

The present invention provides, for example, the following [1] to [18].
[1] A recycled polyamide resin composition obtained by melt-kneading a polyamide resin (a) or a polyamide resin composition (A) containing the polyamide resin (a) as a main component, and a polyamide-based resin waste material (B), wherein
   the polyamide-based resin waste material (B) comprises a polyamide resin (b1) and a thermoplastic resin (b2) other than a polyamide resin,
   more than 0% by mass and 2.00% by mass or less of the thermoplastic resin (b2) other than a polyamide resin is comprised in 100% by mass of the polyamide-based resin waste material (B), and
   2% by mass or more and less than 50% by mass of the polyamide-based resin waste material (B) is comprised in 100% by mass of the recycled polyamide resin composition.
[2] The recycled polyamide resin composition according to [1], wherein, in a case where a total amount of the polyamide resin (a) and the polyamide resin (b1) is 100 parts by mass, a content of the polyamide resin (b1) is 5 parts by mass or more.
[3] The recycled polyamide resin composition according to [1] or [2], wherein, in a case where a total amount of the polyamide resin (a) and the polyamide resin (b1) is 100 parts by mass, a content of the thermoplastic resin (b2) other than a polyamide resin is 0.05 parts by mass or more.
[4] The recycled polyamide resin composition according to any of [1] to [3], wherein, in a case where a total amount of the polyamide resin (a) and the polyamide resin (b1) is 100 parts by mass, a content of the polyamide resin (b1) is 5 parts by mass or more and a content of the thermoplastic resin (b2) other than a polyamide resin is 0.05 parts by mass or more.
[5] The recycled polyamide resin composition according to any of [1] to [4], wherein the thermoplastic resin (b2) other than a polyamide resin is at least one selected from the group consisting of a polyester resin, a polyolefin resin and polyvinyl alcohol.
[6] The recycled polyamide resin composition according to any of [1] to [5], wherein the polyamide resin (a) or the polyamide resin composition (A) containing the polyamide resin (a) as a main component is the polyamide resin composition (A) containing the polyamide resin (a) as a main component and comprises at least one selected from the group consisting of a lubricant and a heat-resistant agent.
[7] The recycled polyamide resin composition according to any of [1] to [6], wherein the polyamide-based resin waste material (B) comprises a color material.
[8] The recycled polyamide resin composition according to any of [1] to [7], wherein the polyamide resin (a) or the polyamide resin (a) in the polyamide resin composition (A) containing the polyamide resin (a) as a main component comprises at least one selected from the group consisting of polyamide 4, polyamide 46, polyamide 410, polyamide 56, polyamide 510, polyamide 512, polyamide 6, polyamide 66, polyamide 610, polyamide 612, polyamide 1010, polyamide 1012, polyamide 11, polyamide 12, polyamide 6/66, polyamide 6/12 and polyamide 6/66/12.
[9] The recycled polyamide resin composition according to any of [1] to [8], wherein the polyamide resin (a) or the polyamide resin (a) in the polyamide resin composition (A) containing the polyamide resin (a) as a main component is an aliphatic homopolyamide resin.
[10] The recycled polyamide resin composition according to any of [1] to [8], wherein the polyamide resin (a) or the polyamide resin (a) in the polyamide resin composition (A) containing the polyamide resin (a) as a main component is an aliphatic copolymerized polyamide resin.
[11] The recycled polyamide resin composition according to any of [1] to [10], wherein the polyamide resin (b1) is an aliphatic homopolyamide resin.
[12] The recycled polyamide resin composition according to any of [1] to [11], wherein the polyamide-based resin waste material (B) is a waste material of monofilaments.
[13] The recycled polyamide resin composition according to any of [1] to [12], wherein a difference (Tm - Tc) between a melting point and a crystallization temperature, as measured with a differential scanning calorimeter (DSC), is 10 to 45°C.
[14] The recycled polyamide resin composition according to any of [1] to [13], wherein an extracted content in boiling together with pure water for 6 hours is 0.5 to 7.5% by mass.
[15] A molded article of the recycled polyamide resin composition according to any of [1] to [14].
[16] The molded article according to [15], wherein the molded article is a monofilament.
[17] A method for producing a recycled polyamide resin composition by melt-kneading a polyamide resin (a) or a polyamide resin composition (A) containing the polyamide resin (a) as a main component, and a polyamide-based resin waste material (B), wherein
   the polyamide-based resin waste material (B) comprises a polyamide resin (b1) and a thermoplastic resin (b2) other than a polyamide resin,
   more than 0% by mass and 2.00% by mass or less of the thermoplastic resin (b2) other than a polyamide resin is comprised in 100% by mass of the polyamide-based resin waste material (B), and
   2% by mass or more and less than 50% by mass of the polyamide-based resin waste material (B) is comprised in 100% by mass of the recycled polyamide resin composition.
[18] The method for producing a recycled polyamide resin composition according to [17], comprising
   Step 1 of pulverizing the polyamide-based resin waste material (B),
   Step 2 of adding and mixing the polyamide resin (a) or the polyamide resin composition (A) containing the polyamide resin (a) as a main component to and with the pulverized polyamide-based resin waste material (B) obtained in Step 1, and
   Step 3 of melt-kneading the mixture obtained in Step 2, to obtain a pellet.

### Advantageous Effect of Invention

The recycled polyamide resin composition of the present invention, even when including a waste material composition, is not only enhanced in tensile elastic modulus, but also favorable in moldability, as compared with a case of no waste material composition included.

### Description of Embodiments

The present invention relates to a recycled polyamide resin composition obtained by melt-kneading a polyamide resin (a) or a polyamide resin composition (A) containing the polyamide resin (a) as a main component, and a polyamide-based resin waste material (B), wherein
the polyamide-based resin waste material (B) includes a polyamide resin (b1) and a thermoplastic resin (b2) other than a polyamide resin,
more than 0% by mass and 2.00% by mass or less of the thermoplastic resin (b2) other than a polyamide resin is comprised in 100% by mass of the polyamide-based resin waste material (B), and
2% by mass or more and less than 50% by mass of the polyamide-based resin waste material (B) is comprised in 100% by mass of the recycled polyamide resin composition.

### <<Polyamide resin (a) or polyamide resin composition (A) containing polyamide resin (a) as main component>>

The recycled polyamide resin composition comprises a polyamide resin (a) or a polyamide resin composition (A) containing the polyamide resin (a) as a main component.

The polyamide resin (a) is not particularly restricted, and examples thereof include an aliphatic homopolyamide resin and an aliphatic copolymerized polyamide resin.

### (Aliphatic homopolyamide resin (a-1)) .

The aliphatic homopolyamide resin is a polyamide resin consisting essentially of one aliphatic monomer-derived constituent unit. The aliphatic homopolyamide resin may consist essentially of at least one of one lactam and an aminocarboxylic acid, or may consist essentially of a combination of one diamine and one dicarboxylic acid. Herein, the combination of a diamine and a dicarboxylic acid is regarded as one monomer in the form of a combination of one diamine and one dicarboxylic acid. The "aliphatic" also include alicyclic.

The number of carbon atoms in the lactam is preferably 4 to 12, more preferably 5 to 12. The number of carbon atoms in the aminocarboxylic acid is preferably 4 to 12, more preferably 5 to 12. The number of carbon atoms in the diamine is preferably 2 to 20, more preferably 4 to 12. The number of carbon atoms in the dicarboxylic acid is preferably 2 to 20, more preferably 6 to 12.

Examples of the lactam include ε-caprolactam, enantholactam, undecanelactam, dodecanelactam, 2-pyrrolidone (γ-butyrolactam), 2-piperidone, and laurolactam (ω-lauryllactam). Among these, one selected from the group consisting of ε-caprolactam, undecanelactam and dodecanelactam is preferred from the viewpoint of polymerization productivity.

Examples of the aminocarboxylic acid include 6-aminocaproic acid, 7-aminoheptanoic acid, 9-aminononanoic acid, 11-aminoundecanoic acid, and 12-aminododecanoic acid.

Examples of the diamine include aliphatic diamines such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine; and alicyclic diamines such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)propane, 1,3-/1,4-bisaminomethylcyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, and norbornane dimethylenediamine.

Examples of the dicarboxylic acid include aliphatic dicarboxylic acid such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid; and alicyclic dicarboxylic acids such as 1,3-/1,4-cyclohexanedicarboxylic acid, dicyclohexanemethane-4,4'-dicarboxylic acid, and norbornanedicarboxylic acid.

Specific examples of the aliphatic polyamide resin include polybutyrolactam (polyamide 4), polyvalerolactam (polyamide 5), polycaprolactam (polyamide 6), polyenantholactam (polyamide 7), polyundecanelactam (polyamide 11), polylauryllactam (polyamide 12), polyhexamethylene adipamide (polyamide 66), polytetramethylene adipamide (polyamide 46), polytetramethylene azelamide (polyamide 49), polytetramethylene sebacamide (polyamide 410), polytetramethylene dodecamide (polyamide 412), polypentamethylene adipamide (polyamide 56), polypentamethylene azelamide (polyamide 59), polypentamethylene sebacamide (polyamide 510), polypentamethylene dodecamide (polyamide 512), polyhexamethylene azelamide (polyamide 69), polyhexamethylene sebacamide (polyamide 610), polyhexamethylene dodecamide (polyamide 612), polynonamethylene adipamide (polyamide 96), polynonamethylene azelamide (polyamide 99), polynonamethylene sebacamide (polyamide 910), polynonamethylene dodecamide (polyamide 912), polydecamethylene adipamide (polyamide 106), polydecamethylene azelamide (polyamide 109), polydecamethylene decamide (polyamide 1010), polydecamethylene dodecamide (polyamide 1012), polydodecamethylene adipamide (polyamide 126), polydodecamethylene azelamide (polyamide 129), polydodecamethylene sebacamide (polyamide 1210), and polydodecamethylene dodecamide (polyamide 1212). These aliphatic homopolyamide resins can be each used singly or as a mixture of two or more kinds thereof.

Among these aliphatic homopolyamide resins, polyamide 6, polyamide 66, polyamide 610, polyamide 612, polyamide 11, and polyamide 12 are preferred, polyamide 6 and polyamide 66 are more preferred, and polyamide 6 is further preferred from the viewpoint of compatibility with the polyamide-based resin waste material.

The relative viscosity of the aliphatic homopolyamide resin, as measured at 25°C in a solution in which 1 g of the polyamide resin is dissolved in 100 ml of 96% concentrated sulfuric acid, according to JIS K6920-2, is preferably 2.0 or more, more preferably 2.3 to 5.0, further preferably 3.0 to 4.5, from the viewpoint of moldability of the polyamide resin composition.

In a case where the aliphatic homopolyamide resin comprises two or more polyamide resins different in relative viscosity, the relative viscosity in the aliphatic homopolyamide resin is preferably measured according to the above-described content, and in a case where the relative viscosity of each of such polyamide resins and the mixing ratio of such polyamide resins are revealed, the average value calculated by totalizing the values obtained by multiplying the mixing ratio with such each relative viscosity may be defined as the relative viscosity of the aliphatic homopolyamide resin. In the present invention, in a case where two or more are comprised, a measurement value is adopted.

### (Aliphatic copolymerized polyamide resin (a-2))

The aliphatic copolymerized polyamide resin is a polyamide resin consisting essentially of a constituent unit derived from two or more aliphatic monomers. The aliphatic copolymerized polyamide resin is a copolymer of a monomer selected from the group consisting essentially of combination of a diamine and a dicarboxylic acid, a lactam and an aminocarboxylic acid. Herein, the combination of a diamine and a dicarboxylic acid is regarded as one monomer in the form of a combination of one diamine and one dicarboxylic acid.

Examples of the diamine include those which are the same as those exemplified as raw materials of the aliphatic homopolyamide resin.

Examples of the dicarboxylic acid include those which are the same as those exemplified as raw materials of the aliphatic homopolyamide resin.

Examples of the lactam include those which are the same as those exemplified as raw materials of the aliphatic homopolyamide resin.

Examples of the aminocarboxylic acid include those which are the same as those exemplified as raw materials of the aliphatic homopolyamide.

Specific examples of the aliphatic copolymerized polyamide resin include aliphatic copolymerized polyamides such as a caprolactam/hexamethylenediaminoadipic acid copolymer (polyamide 6/66), a caprolactam/hexamethylenediaminoazelaic acid copolymer (polyamide 6/69), a caprolactam/hexamethylenediaminosebacic acid copolymer (polyamide 6/610), a caprolactam/hexamethylenediaminoundecanedicarboxylic acid copolymer (polyamide 6/611), a caprolactam/hexamethylenediaminododecanedicarboxylic acid copolymer (polyamide 6/612), a caprolactamlaminoundecanoic acid copolymer (polyamide 6/11), a caprolactam/lauryllactam copolymer (polyamide 6/12), a caprolactam/hexamethylenediaminoadipic acid/lauryllactam copolymer (polyamide 6/66/12), a caprolactam/hexamethylenediaminoadipic acid/hexamethylenediaminosebacic acid copolymer (polyamide 6/66/610), a caprolactam/hexamethylenediaminoadipic acid/hexamethylenediaminododecanedicarboxylic acid copolymer (polyamide 6/66/612), and a caprolactam/hexamethylenediaminoadipic acid/aminoundecanoic acid copolymer (polyamide 6/66/11). These aliphatic copolymerized polyamides may be each adopted singly or as a mixture of two or more kinds thereof.

Among these aliphatic copolymerized polyamide resins, polyamide 6/66, polyamide 6/12, and polyamide 6/66/12 are preferred, polyamide 6/66 and polyamide 6/66/12 are more preferred, and polyamide 6/66 is further preferred from the viewpoint of compatibility with the polyamide-based resin waste material.

The relative viscosity of the aliphatic copolymerized polyamide resin, as measured at 25°C in a solution in which 1 g of the polyamide resin is dissolved in 100 ml of 96% concentrated sulfuric acid, according to JIS K6920-2, is preferably 2.0 to 5.0, more preferably 2.3 to 5.0, further preferably 3.0 to 4.5, from the viewpoint of moldability of the polyamide resin composition.

In a case where the aliphatic copolymerized polyamide resin comprises two or more polyamide resins different in relative viscosity, the relative viscosity is determined by the same method as described in the section of the aliphatic homopolyamide resin.

The polyamide resin (a) preferably comprises at least one selected from the group consisting of polyamide 4, polyamide 46, polyamide 410, polyamide 56, polyamide 510, polyamide 512, polyamide 6, polyamide 66, polyamide 610, polyamide 612, polyamide 1010, polyamide 1012, polyamide 11, polyamide 12, polyamide 6/66, polyamide 6/12 and polyamide 6/66/12 from the viewpoint of compatibility with the polyamide-based resin waste material, and more preferably comprises at least one selected from the group consisting of polyamide 6, polyamide 6/66 and polyamide 6/66/12 from the viewpoint of a further enhancement in tensile elastic modulus.

The polyamide resin (a) may comprise an aromatic polyamide resin, in addition to the aliphatic homopolyamide resin and the aliphatic copolymerized polyamide resin. The aromatic polyamide resin refers to a polyamide resin comprising at least one aromatic monomer component-derived constituent unit, and may be a homopolymer or a copolymer. The polyamide resin (a) preferably comprises 5% by mass or less, more preferably 1 % by mass or less, further preferably 0% by mass of the aromatic polyamide resin. In other words, the polyamide resin (a) further preferably consists essentially of the aliphatic polyamide resin.

### (Production of polyamide resin)

Examples of the production apparatus of the polyamide resin (a) include known polyamide production apparatuses, for example, a batch type reaction oven, a one tank type or multiple tank type continuous reaction apparatus, a tubular continuous reaction apparatus, and a kneading reaction extruder such as a single-screw type kneading extruder or a twin-screw type kneading extruder. The polymerization method can be polymerization in which a known method such as melt polymerization, solution polymerization or solid phase polymerization is used and an operation under an ordinary pressure, a reduced pressure or an increased pressure is repeated. These polymerization methods can be used singly or in appropriate combinations thereof.

The polyamide resin is produced by polymerizing or copolymerizing the polyamide raw material by any known method such as melt polymerization, solution polymerization, and solid phase polymerization. It is preferable for promotion of such polymerization to appropriately add a catalyst or the like at any stage of such polymerization, or at any stage during melt-kneading after such polymerization.

The relative viscosity of the polyamide resin (a), as measured at 25°C in a solution in which 1 g of the polyamide resin is dissolved in 100 ml of 96% concentrated sulfuric acid, according to JIS K6920-2, is preferably 2.0 to 5.0, more preferably 2.3 to 5.0, further preferably 3.0 to 4.5, from the viewpoint of moldability of the polyamide resin composition.

The polyamide resin (a) is preferably one in which the same kind of polyamide resins different in relative viscosity are mixed, or is preferably one in which the same kind of polyamide resins different in terminal amino group concentration are mixed.

The terminal amino group concentration in the polyamide resin (a), in terms of the terminal amino group concentration determined by neutralization titration of a solution in which the polyamide resin is dissolved in a mixed solvent of phenol and methanol, is preferably 2.0 × 10⁻⁵ eq/g or more, more preferably in a range of 2.8 × 10⁻⁵ eq/g or more, and preferably 10.0 × 10⁻⁵ eq/g or less, more preferably 9.8 × 10⁻⁵ eq/g or less.

The terminal carboxyl group concentration in the polyamide resin (a), in terms of the terminal carboxyl group concentration determined by neutralization titration of a solution in which the polyamide resin is dissolved in a benzyl alcohol solvent, is preferably 7.5 × 10⁻⁵ eq/g or less, more preferably in a range of 6.5 × 10⁻⁵ eq/g or less, and preferably 2.0 × 10⁻⁵ eq/g or more, more preferably 2.5 × 10⁻⁵ eq/g or more.

In a case where the polyamide resin (a) comprises two or more polyamide resins different in terminal amino group concentration, the terminal amino group concentration in the polyamide resin is preferably measured according to the above-mentioned neutralization titration, and in a case where the terminal amino group concentration of each of such polyamide resins and the mixing ratio of such polyamide resins are revealed, the average value calculated by totalizing the values obtained by multiplying the mixing ratio with such each terminal amino group concentration may be defined as the terminal amino group concentration of the polyamide resin. In the present invention, in a case where two or more are comprised, a neutralization titration value is adopted.

The same calculation is adopted also in a case where the polyamide resin (a) comprises two or more polyamide resins different in terminal carboxyl group concentration.

The terminal amino group concentration and the terminal carboxyl group concentration can be adjusted within the above ranges by modulation of the molecular weight of the polyamide resin, modulation of the terminal of the polyamide resin with compounds such as dicarboxylic acid, diamine, carboxylic acid, and amine, and the like.

A case where the component (A) is a polyamide resin composition containing the polyamide resin (a) as a main component (hereinafter, also referred to as "polyamide resin composition") is as described below.

Herein, the phrase "polyamide resin (a) as a main component" means the polyamide resin (a) is comprised in the largest amount on a mass basis among all components in the polyamide resin composition, and means that preferably 95.00% by mass or more, more preferably 97.00% by mass or more of the polyamide resin (a) is comprised in 100% by mass of the polyamide resin composition (A).

The polyamide resin composition may comprise any other thermoplastic resin than a polyamide resin as long as the object of the present invention is not impaired, and such any other thermoplastic resin is preferably not comprised.

The polyamide resin composition may appropriately comprise, as an optional component, a function-imparting agent such as a dye, a pigment, a fibrous reinforcement substance, a particulate reinforcement substance, a plasticizer, an antioxidant, a light stabilizer, a heat-resistant agent, a foaming agent, a weather-resistant agent, a crystallization promoter, a crystal nucleating agent, an antistatic agent, a release agent, a lubricant, an impregnating agent, a flame retardant, a flame retardant auxiliary, and/or a colorant. Among these, at least one selected from the group consisting of a lubricant and a heat-resistant agent is preferably comprised.

### <Heat-resistant agent>

The heat-resistant agent used here can be an organic or inorganic heat-resistant agent depending on the intended object, and these may be used singly or in combinations of two or more kinds thereof.

The heat-resistant agent refers to a component which suppresses thermal oxidization or thermal degradation of the polyamide resin, and also encompasses one called antioxidant for the intended object.

### ((Organic heat-resistant agent))

Examples of the organic heat-resistant agent can include a phenol-based compound, a phosphorus-based compound, a sulfur-based compound, and a nitrogen-based compound. These may be used singly or in combinations of two or more kinds thereof.

### (Phenol-based compound)

Examples of the phenol-based compound preferably include a hindered phenol-based compound. Herein, the hindered phenol refers to a compound having a substituent at the ortho-position (hereinafter, also referred to as "o-position") to a hydroxyl group of phenol. The substituent at the o-position is not particularly limited, and examples thereof include an alkyl group, an alkoxy group, an amino group, and halogen. Among these, an alkyl group such as a methyl group, an ethyl group, a n-propyl group, an i-propyl group, a n-butyl group, a sec-butyl group, an i-butyl group, or a t-butyl group is preferred, a bulky i-propyl group, sec-butyl group, i-butyl group, or t-butyl group is more preferred, and a t-butyl group is most preferred. Such a substituent preferably bonds at both of the two o-positions to a hydroxyl group of phenol.

Specific examples of hindered phenol having a t-butyl group at the o-position can include N,N'-hexamethylenebis(3,5-di-t-butyl-4-hydroxy-hydrocinnamamide), pentaerythritol-tetrakis[3-(3,5-di-t-butyl-4-hydroxyphenyl)-propionate, ethylenebis(oxyethylene)bis[3-(5-tert-butyl-4-hydroxy-m-tolyl)propionate], and 3,9-bis[2-[3-(3-tert-butyl-4-hydroxy-5-methylphenyl)propionyloxy]-1,1-dimethylethyl]-2,4,8,10-tetraoxaspiro[5.5]undecane. These may be used singly or in combinations of two or more kinds thereof. Examples of a commercially available product of such a heat-resistant agent include "Irganox 245" "Irganox 1010" (BASF SE) and "Sumilizer GA-80" (Sumitomo Chemical Co., Ltd.). These may be used singly or in combinations of two or more kinds thereof.

### (Phosphorus-based compound)

The phosphorus-based compound is preferably a phosphite compound of hindered phenol or a hypophosphite compound of hindered phenol, more preferably a phosphite compound of hindered phenol having a t-butyl group at the o-position or a hypophosphite compound of hindered phenol having a t-butyl group at the o-position, further preferably a phosphite compound of hindered phenol having a t-butyl group at the o-position. Specific examples of the phosphite compound of hindered phenol having a t-butyl group at the o-position can include tris(2,4-di-t-butylphenyl)phosphite and bis(2,6-di-t-butyl-4-methylphenyl)pentaerythritol diphosphite. Specific examples of the hypophosphite compound of hindered phenol having a t-butyl group at the o-position can include biphenyl containing p,p,p',p'-tetrakis(2,4-di-tert-butylphenoxy)-4,4-biphenyldiphosphine as a main component, a reaction product of phosphorus trichloride and 2,4-di-tert-butylphenol. Examples of a commercially available product of such a heat-resistant agent include "Irgafos 168" (BASF SE) and "hostanox P-EPQ" (Clariant Japan K.K.). These may be used singly or in combinations of two or more kinds thereof.

### (Sulfur-based compound)

Examples of the sulfur-based compound can include distearyl-3,3-thiodipropionate, pentaerythrityl tetrakis(3-laurylthiopropionate) and didodecyl(3,3'-thiodipropionate). These may be used singly or in combinations of two or more kinds thereof.

### (Nitrogen-based compound)

Examples of the nitrogen-based compound can include melamine, melamine cyanurate, benzoguanamine, dimethylol urea and cyanuric acid. These may be used singly or in combinations of two or more kinds thereof.

The organic heat-resistant agent is preferably a phenol-based compound or a phosphorus-based compound, more preferably a hindered phenol-based compound from the viewpoint of coloration of a material.

### (Inorganic heat-resistant agent)

The type of the inorganic heat-resistant agent of the heat-resistant agent is a copper compound or a potassium halide, and examples of the copper compound include cuprous iodide, cuprous bromide, cupric bromide, and copper acetate. Cuprous iodide is preferred from the viewpoints of heat resistance and suppression of metal corrosion. Examples of the potassium halide include potassium iodide, potassium bromide, and potassium chloride. Potassium iodide and/or potassium bromide are/is preferred from the viewpoints of heat resistance and long-term stability of the inorganic heat-resistant agent. These may be used singly or in combinations of two or more kinds thereof.

### <Lubricant>

The lubricant refers to one contributing to an enhancement in releasability from a mold during molding of the resin composition.

Examples of the lubricant include compounds such as a terminal modified product of polyalkylene glycol, a phosphate compound or a phosphite compound, a higher fatty acid monoester compound, a higher fatty acid or a metal salt thereof, carboxylic acid amide, an ethylenebisamide compound, low-molecular weight polyethylene, magnesium silicate and a substituted benzylidene sorbitol compound. These may be used singly or in combinations of two or more kinds thereof. Among these, a higher fatty acid or a metal salt thereof is preferred.

Examples of the terminal modified product of polyalkylene glycol include a terminal modified product of polyethylene glycol and a terminal modified product of polypropylene glycol.

More specific examples of the phosphate and phosphite include aliphatic phosphates and aliphatic phosphites, such as di(2-ethylhexyl)phosphate, tridecyl phosphite, tris(tridecyl)phosphite, and tristearyl phosphite, and aromatic phosphites such as triphenyl phosphite and diphenyl monodecyl phosphite.

Examples of the higher fatty acid monoester include myristyl myristate, stearyl stearate, behenyl behenate, oleyl oleate, and hexyldecyl myristate.

Examples of the higher fatty acid include myristic acid, palmitic acid, behenic acid, oleic acid, and arachidic acid.

Examples of the metal salt of the higher fatty acid include zinc stearate, lithium stearate, calcium stearate, and aluminum palmitate.

Examples of the carboxylic acid amide include aliphatic monocarboxylic acid amides such as lauric acid amide, palmitic acid amide, oleic acid amide, stearic acid amide, erucic acid amide, behenic acid amide, ricinoleic acid amide, and 12-hydroxystearic acid amide, N-substituted aliphatic monocarboxylic acid amides such as N-lauryllauric acid amide, N-palmitylpalmitic acid amide, N-oleylpalmitic acid amide, N-oleyloleic acid amide, N-oleylstearic acid amide, N-stearylstearic acid amide, N-stearyloleic acid amide, N-stearylerucic acid amide, N-stearyl-12-hydroxystearic acid amide, N-oleyl-12-hydroxystearic acid amide, methylolstearic acid amide, methylolbehenic acid amide, and 12-hydroxystearic acid monoethanolamide, aliphatic carboxylic acid bisamides such as methylenebisstearic acid amide, methylenebislauric acid amide, methylenebis-12-hydroxystearic acid amide, ethylenebiscapric acid amide, ethylenebislauric acid amide, ethylenebisoleic acid amide, ethylenebisstearic acid amide, ethylenebiserucic acid amide, ethylenebisbehenic acid amide, ethylenebisisostearic acid amide, ethylenebis-12-hydroxystearic acid amide, butylenebisstearic acid amide, hexamethylenebisoleic acid amide, hexamethylenebisstearic acid amide, hexamethylenebisbehenic acid amide, hexamethylenebis-12-hydroxystearic acid amide, N,N'-dioleylsebacic acid amide, N,N'-dioleyladipic acid amide, N,N'-distearyladipic acid amide, and N,N'-distearylsebacic acid amide, alicyclic carboxylic acid amides such as N,N'-dicyclohexanecarbonyl-1,4-diaminocyclohexane, 1,4-cyclohexanedicarbamide, 1,4-cyclohexanedicarboxylic acid diaminocyclohexane, 1,2,3,4-butanetetracarboxylic acid tetracyclohexylamide, N,N'-bis(3-hydroxypropyl)-1,4-cubanedicarbamide, N,N'-(1,4-cyclohexanediyl)bis(acetamide), and tris(methylcyclohexyl)propane tricarboxamide, and aromatic carboxylic acid amides such as 1,4-cyclohexanedicarboxylic acid dianilide, 1,4-cyclohexanedicarboxylic acid dibenzylamide, trimesic acid tris(t-butylamide), trimesic acid tricyclohexylamide, trimesic acid tri(2-methylcyclohexylamide), trimesic acid tri(4-cyclohexylamide), 2,6-naphthalene acid dicarboxylic acid dicyclohexylamide, N,N'-dibenzylcyclohexane-1,4-dicarboxamide, N,N'-distearylisophthalic acid amide, N,N'-distearylterephthalic acid amide, m-xylylenebisstearic acid amide, and m-xylylenebis-12-hydroxystearic acid amide.

Examples of the ethylenebisamide compound include ethylenebisstearylamide and ethylene bispalmitylamide.

Examples of the low-molecular weight polyethylene include one having a molecular weight in a range of 500 to 5000, and one having a molecular weight in a range of 1000 to 3000.

Examples of the magnesium silicate include one having an average particle size of 1 to 10 µm.

Examples of the substituted benzylidene sorbitol compound include a substituted benzylidene sorbitol synthesized by dehydration-condensation of sorbitol and substituted benzaldehyde under an acid catalyst.

These may be used singly or in combinations of two or more kinds thereof.

An optional additive may be preferably comprised at 0.01 to 1.00% by mass, more preferably 0.05 to 0.50% by mass in 100% by mass of the polyamide resin composition (A).

The content of the polyamide resin (a) or the polyamide resin composition (A) containing the polyamide resin (a) as a main component in 100% by mass of the recycled polyamide resin composition is preferably more than 50% by mass and 98% by mass or less, more preferably 70 to 97% by mass, further preferably 80 to 95% by mass, most preferably 80 to 87% by mass. When the polyamide resin (a) or the polyamide resin composition (A) containing the polyamide resin (a) as a main component is comprised in the above range in the recycled polyamide resin composition, a reduction in quality of a molded article produced from the recycled polyamide resin composition is decreased.

### <<Polyamide-based resin waste material (B)>>

The recycled polyamide resin composition comprises a polyamide-based resin waste material (B).

The polyamide-based resin waste material (B) comprises a polyamide resin (b1) and a thermoplastic resin (b2) other than a polyamide resin, and the content of the thermoplastic resin (b2) other than a polyamide resin in 100% by mass of the polyamide-based resin waste material (B) is more than 0% by mass and 2.00% by mass or less.

### <Polyamide resin (b1)>

The polyamide resin (b1) is not particularly restricted, and examples thereof include an aliphatic homopolyamide resin and an aliphatic copolymerized polyamide resin. Examples thereof include those which are the same as those exemplified with respect to the polyamide resin (a).

The polyamide resin (b1) is preferably an aliphatic homopolyamide resin, more preferably polyamide 6 or polyamide 66, further preferably polyamide 6 from the viewpoint of compatibility with the polyamide resin (a) or the polyamide resin composition (A) containing the polyamide resin (a) as a main component.

The polyamide resin (b1) may comprise, in addition to the aliphatic homopolyamide resin and the aliphatic copolymerized polyamide resin, an aromatic polyamide resin. Preferably 5% by mass or less, more preferably 1% by mass or less, further preferably 0% by mass of the aromatic polyamide resin is comprised in the polyamide resin (b1).

The polyamide resin (b1), when has a molecular weight at the same level as that of the polyamide resin (a) as the component (A), is favorable in moldability, and therefore the relative viscosity, as measured at 25°C in a solution in which 1 g of the polyamide resin is dissolved in 100 ml of 96% concentrated sulfuric acid, according to JIS K6920-2, is preferably 2.0 or more, more preferably 2.3 to 5.0, further preferably 2.3 to 4.5.

The content of the polyamide resin (b1) in 100% by mass of the polyamide-based resin waste material (B) is preferably 95.00 to 99.80% by mass, more preferably 97.00 to 99.50% by mass, further preferably 98.00 to 99.60% by mass. When the content is in the above range, functions/characteristics of the polyamide resin are not impaired.

The contents of the polyamide resin (b1) and the thermoplastic resin (b2) other than a polyamide resin, serving as each component in the polyamide-based resin waste material (B), can be analyzed by a known method such as nuclear magnetic resonance analysis, IR (infrared spectroscopy), or liquid chromatography.

### <Thermoplastic resin (b2) other than polyamide resin>

Examples of the thermoplastic resin (b2) other than a polyamide resin include a polyester resin, a polyolefin resin, polyvinyl alcohol, a polystyrene-based resin, a polyether-based resin, a poly(meth)acrylate-based resin, a polycarbonate-based resin, a cellulose-based resin, a polyimide-based resin, a thermoplastic polyurethane-based resin, a polyamide elastomer, a polyurethane elastomer, and a polyester elastomer, and among these, at least one selected from the group consisting of a polyester resin, a polyolefin resin, a polyvinyl alcohol, a polyamide elastomer, a polystyrene-based resin and a poly(meth)acrylate-based resin is preferred, at least one selected from the group consisting of a polyester resin, a polyolefin resin and a polyvinyl alcohol is more preferred, and a polyester resin is further preferred, from the viewpoint of compatibility with the polyamide resin.

Examples of the polyester resin include polybutylene terephthalate (PBT), polyethylene terephthalate (PET), polyethylene isophthalate (PEI), poly(ethylene terephthalate/ethylene isophthalate) copolymer (PET/PEI), polytrimethylene terephthalate (PTT), polycyclohexane dimethylene terephthalate (PCT), polyethylene naphthalate (PEN), polybutylene naphthalate (PBN), polyarylate (PAR), liquid crystal polyester (LCP), polylactic acid (PLA), and polyglycolic acid (PGA). Among these, polyethylene terephthalate (PET) is preferred from the viewpoint of heat resistance.

Examples of the polyolefin resin include high-density polyethylene (HDPE), medium-density polyethylene (MDPE), low-density polyethylene (LDPE), linear low-density polyethylene (LLDPE), ultrahigh-molecular weight polyethylene (UHMWPE), polypropylene (PP), polybutene (PB), a polymethylpentene (TPX), ethylene/propylene copolymer (EPR), and an ethylene/butene copolymer (EBR).

The content of the thermoplastic resin (b2) other than a polyamide resin in 100% by mass of the polyamide-based resin waste material (B) is more than 0% by mass and 2.00% by mass or less. When the thermoplastic resin (b2) other than a polyamide resin is not comprised in the above range in the polyamide-based resin waste material (B), characteristics of the thermoplastic resin is considerably exhibited and characteristics of the polyamide resin can be impaired. Here, "more than 0% by mass" means that a case of no inclusion is excluded.

The polyamide-based resin waste material (B) may appropriately comprise, as an optional component, a function-imparting agent such as a dye, a pigment, a fibrous reinforcement substance, a particulate reinforcement substance, a plasticizer, an antioxidant, a light stabilizer, a heat-resistant agent, a foaming agent, a weather-resistant agent, a crystallization promoter, a crystal nucleating agent, an antistatic agent, a release agent, a lubricant, an impregnating agent, a flame retardant, a flame retardant auxiliary, and/or a color material.

Among these, color materials such as dyes, pigments, and colorants are often comprised in fishing nets. Therefore, the polyamide-based resin waste material (B) preferably comprises a color material. Examples of the color material include carbon black.

The content of the color material in 100% by mass of the polyamide-based resin waste material (B) is preferably 1.00% by mass or less, more preferably more than 0% by mass and 1.00% by mass or less. When the color material in the polyamide-based resin waste material (B) is comprised in the above range, functions/characteristics of the recycled polyamide resin composition are not impaired. Here, "more than 0% by mass" means that a case of no inclusion is excluded.

The content of the color material in the polyamide-based resin waste material (B) can be analyzed by a known method such as differential thermal-thermogravimetric simultaneous measurement.

Examples of the polyamide-based resin waste material (B) include polyamide-based resin molded articles satisfying the above compositional ratio, for example, waste materials of monofilaments, such as fishing nets, fishing lines, guts, ropes, toothbrushes, hairbrushes, cosmetic brushes, industrial brushes, fabrics, chain coils, lead wires, hexagonal nets, bird-proof wires, artificial hairs, and mowing cords, preferably include waste materials of fishing nets and fishing lines which can contaminate the marine environment, more preferably include fishing nets.

In 100% by mass of the recycled polyamide resin composition, 2% by mass or more and less than 50% by mass, preferably 2 to 30% by mass, more preferably 5 to 20% by mass, further preferably 12 to 20% by mass of the polyamide-based resin waste material (B) is comprised. When the polyamide-based resin waste material (B) is comprised in the above range in the recycled polyamide resin composition, no reduction in quality of a molded article produced from the recycled polyamide resin is caused.

### <<Recycled polyamide resin composition>>

The recycled polyamide resin composition is obtained by melt-kneading the polyamide resin (a) or the polyamide resin composition (A) containing the polyamide resin (a) as a main component, and the polyamide-based resin waste material (B).

The recycled polyamide resin composition is preferably obtained by a production method comprising the following steps:
Step 1 of pulverizing the polyamide-based resin waste material (B),
Step 2 of adding and mixing the polyamide resin (a) or the polyamide resin composition (A) containing the polyamide resin (a) as a main component to and with the pulverized polyamide-based resin waste material (B) obtained in Step 1, and
Step 3 of melt-kneading the mixture obtained in Step 2, to obtain a pellet.

In addition to these steps, a washing step, a dehydration step, a drying step, and the like of the polyamide-based resin waste material (B) may be comprised.

Step 1 can be omitted in the case of use of a commercially available pellet-like polyamide-based resin waste material (B).

In Step 1, the polyamide-based resin waste material (B) is pulverized.

The pulverization apparatus is not particularly restricted as long as it is a known pulverization apparatus, and examples thereof include a jaw crusher, a gyratory crusher, a cone crusher, an impact crusher, a roll crusher, an autogenous pulverizer, a stamp mill, a grindstone pulverizer, a stone mill, a large-size shredder, mills such as a ring mill, a roll mill, a cutter mill, a hammer mill, a turbo mill, a jet mill, a pin mill, a centrifugal mill, and a chopper mill, a grinding machine, Rotoplex, a pulverizer, and an ultra-rotor. The pulverization may be performed in a wet manner.

In Step 2, the polyamide resin (a) or the polyamide resin composition (A) containing the polyamide resin (a) as a main component is added to and mixed with the pulverized polyamide-based resin waste material (B) obtained in Step 1.

The mixing apparatus is not particularly restricted as long as it is a known mixing apparatus, and examples thereof include a mixer and a ball mill. The polyamide resin (a) or the polyamide resin composition (A) containing the polyamide resin (a) as a main component may be in a pellet state.

In Step 3, the mixture obtained in Step 2 is melt-kneaded to obtain a pellet.

The melt-kneading apparatus is not particularly restricted as long as it is a known melt-kneading apparatus, and examples thereof include a single-screw extruder, a twin-screw extruder, a Banbury mixer, a kneader, and a mixing roll.

For example, in the case of use of a twin-screw extruder, any method such as a method comprising compounding and then melt-kneading all raw materials, a method comprising compounding and then melt-kneading some raw materials and further compounding the rest of raw materials and melt-kneading all raw materials, or a method comprising compounding some raw materials and then mixing the rest of raw materials by a side feeder during melt-kneading of such some raw materials may be used, and a method comprising compounding and then melt-kneading all raw materials is preferred.

The melting temperature is not particularly restricted as long as it is a temperature equal to or more than the melting point of each resin, and is preferably a temperature of 280°C or less from the viewpoints of dispersibility and suppression of decomposition of the raw materials.

In a case where at least one selected from the group consisting of a washing step, a dehydration step and a drying step is comprised, such a step is usually performed before Step 1 or may also be performed after Step 1. In a case where the polyamide resin (a) or the polyamide resin composition (A) containing the polyamide resin (a) as a main component is the polyamide resin composition (A), a step of producing the polyamide resin composition (A) may be comprised so as to be performed before Step 2. A step of melt-kneading the pulverized polyamide-based resin waste material (B) obtained in Step 1, to make the resin pellet state, may be comprised so as to be performed before Step 2.

Examples of the combination of the polyamide resin (a) and the polyamide resin (b1) in the recycled polyamide resin composition preferably include a combination in which the polyamide resin (a) is polyamide 6 and the polyamide resin (b1) is polyamide 6, and a combination in which the polyamide resin (a) is polyamide 6/66 and the polyamide resin (b1) is polyamide 6, from the viewpoint of tensile characteristics. While the polyamide resin (a) and the polyamide resin (b1) may be polyamide resins which are the same type or may be polyamide resins which are different types, the polyamide resins are preferably polyamide resins which are the same type, from the viewpoint that not only the tensile strength is kept, but also the tensile elastic modulus is enhanced.

In a case where the polyamide resin (a) and the polyamide resin (b1) in the recycled polyamide resin composition are 100 parts by mass, the content of the polyamide resin (b1) (b1 × 100/(a + b1)) is preferably 5 parts by mass or more, more preferably 5 to 20 parts by mass. In a case where the total amount of the polyamide resin (a) and the polyamide resin (b1) is 100 parts by mass and the content of the polyamide resin (b1) is in the above range, not only an excellent tensile elastic modulus, but also no reduction in quality of a molded article produced from the recycled polyamide resin is achieved.

In a case where the total amount of the polyamide resin (a) and the polyamide resin (b1) is 100 parts by mass in the recycled polyamide resin composition, the content of the thermoplastic resin (b2) other than a polyamide resin (b2 × 100/(a + b1)) is preferably 0.05 parts by mass or more, more preferably 0.05 to 0.40 parts by mass, further preferably 0.05 to 0.20 parts by mass. In a case where the total amount of the polyamide resin (a) and the polyamide resin (b1) is 100 parts by mass and the content of the thermoplastic resin (b2) other than a polyamide resin is in the above range, not only an excellent tensile elastic modulus, but also no reduction in quality of a molded article produced from the recycled polyamide resin is achieved.

The recycled polyamide resin composition may appropriately comprise, in addition to the component (A) and the component (B), a function-imparting agent such as a dye, a pigment, a fibrous reinforcement substance, a particulate reinforcement substance, a plasticizer, an antioxidant, a light stabilizer, a heat-resistant agent, a foaming agent, a weather-resistant agent, a crystallization promoter, a crystal nucleating agent, an antistatic agent, a release agent, a lubricant, an impregnating agent, a flame retardant, a flame retardant auxiliary, and/or a colorant, as an optional component.

Such an optional additive may be preferably comprised at 0.01 to 1.00% by mass, more preferably 0.05 to 0.50% by mass in 100% by mass of the recycled polyamide resin composition.

The tensile strength of the recycled polyamide resin composition, as measured by a method described in Examples, is preferably not less than 1.0 gf/d, more preferably not less than 1.3 gf/d, further preferably not less than 1.6 gf/d. When the tensile strength of the recycled polyamide resin composition is in the above range, a monofilament is obtained which is hardly fractured in use as a fishing net, a fishing line, a cutting component, artificial grass, or the like.

The tensile elastic modulus of the recycled polyamide resin composition, as measured by a method described in Examples, is preferably 6.0 to 12.0 gf/d, more preferably 6.0 to 11.0 gf/d, further preferably 6.7 to 10.8 gf/d. When the tensile elastic modulus of the recycled polyamide resin composition is in the above range, a monofilament which can satisfy both hardness and flexibility in use as a fishing net, a fishing line, a cutting component, artificial grass, or the like is obtained.

The denier of the monofilament is determined by defining the weight of 9000 m of the monofilament, as the denier of the monofilament, and in practice, a value obtained by measuring the weight of 90 cm of the monofilament and multiplying this measurement value with 10000 is defined as the denier of the monofilament.

The difference (Tm - Tc) between the melting point (Tm) and the crystallization temperature (Tc) of the recycled polyamide resin composition is preferably 10 to 45°C, more preferably 20 to 43°C, further preferably 30 to 41°C. When the difference between the melting point and the crystallization temperature of the recycled polyamide resin composition is in the above range, a monofilament which is favorable in moldability into a fishing net, a fishing line, a cutting component, artificial grass, or the like, easily crystallized, and hardly fractured in use is obtained. The melting point and the crystallization temperature are each a value measured with a differential scanning calorimeter (DSC), according to a method described in Examples.

The extracted content in the recycled polyamide resin composition is preferably 0.5 to 7.5% by mass, more preferably 1.0 to 7.0% by mass, further preferably 2.0 to 6.8% by mass. When the extracted content in the recycled polyamide resin composition is in the above range, a monofilament which is flexible and hardly fractured in use as a fishing net, a fishing line, a cutting component, artificial grass, or the like is obtained.

The extracted content in the recycled polyamide resin composition can be measured with, as a specimen, a pellet- or monofilament-like recycled polyamide resin composition. After 10 g of a specimen of the recycled polyamide resin composition is boiled together with pure water for 6 hours and dried in vacuum for 16 hours, the mass of the specimen is measured, and the content of decreased amount is defined as the amount (g) of a hot-water-soluble component. The content can be determined as Extracted content (% by mass) = Amount (g) of hot-water-soluble component/10 (g) × 100. A main component comprised in the extracted content is constituted from low-molecular weight components including monomer and oligomer components of the resins comprised in the polyamide resin composition.

### [Molded article of recycled polyamide resin composition, and application thereof]

The recycled polyamide resin composition can be suitably used for production of a molded article such as a monofilament, an injection-molded article by injection molding, an extruded article by extrusion, a blow-molded article by blow molding, or a rotation-molded article by rotational molding.

The method for producing a monofilament is not particularly limited, and examples thereof include a known monofilament production method.

The method for producing a monofilament preferably comprises a step of producing an unstretched monofilament, and optionally a step of stretching the unstretched monofilament to obtain a stretched monofilament, and a step of heat-treating the stretched monofilament obtained. In a case where a method for producing a polyamide monofilament consists of a step of producing an unstretched monofilament, the resulting monofilament is an unstretched monofilament. In a case where a method for producing a polyamide monofilament comprises a step of producing an unstretched monofilament, a step of stretching the unstretched monofilament to obtain a stretched monofilament, and a step of heat-treating the stretched filament obtained, the resulting monofilament is a stretched monofilament.

### (Step of producing unstretched monofilament)

Examples of the method for producing an unstretched monofilament include a method for producing an unstretched monofilament by melting a pellet of the copolymerized polyamide resin or the polyamide resin composition and extruding the molten pellet through a spinning die nozzle by an extruder or the like, and cooling the extruded product in a cooling medium bath with water, trichlene, or the like. In this case, the distance from a filament exit of such a spinning nozzle to the liquid surface of the cooling medium is preferably kept at about 10 to 300 mm.

The temperature of the extruder is preferably 200°C to 290°C, more preferably 200°C to 280°C.

The temperature of the extrusion die is preferably 150°C to 260°C, more preferably 170°C to 250°C.

The temperature of the cooling medium is preferably 0 to 30°C, more preferably 5 to 20°C.

### (Step of obtaining stretched monofilament)

The step of obtaining a stretched monofilament is a step of stretching the unstretched monofilament obtained in the above step. Here, one-stage stretching or two-stage stretching can be applied to such stretching.

The one-stage stretching and the first-stage stretching in the two-stage stretching are each preferably performed so that the unstretched monofilament is stretched at a predetermined stretching ratio in water vapor or hot water. The stretching ratio at the first stage is preferably 2.0 to 4.5 times, more preferably 2.2 to 4.0 times. When the stretching ratio at the first stage is in the above range, the tensile strength tends to be more enhanced.

In a case where the first-stage stretching is performed in water vapor, the temperature of the water vapor is preferably 95 to 120°C, more preferably 100 to 110°C. When the temperature of the water vapor is in the above range, the resulting monofilament tends to be more enhanced in knot strength and transparency.

In a case where the first-stage stretching is performed in hot water, the temperature of the hot water is preferably 50 to 99°C, more preferably 60 to 99°C. When the temperature of the hot water is in the above range, the resulting monofilament tends to be more enhanced in knot strength and transparency.

The second-stage stretching in the two-stage stretching is preferably performed in a gas atmosphere. The stretching ratio at the second stage is preferably 1.1 to 2.5 times, more preferably 1.2 to 2.0 times. The gas is not particularly limited, and examples thereof include inert gases such as helium, nitrogen and argon, and air. The temperature of the gas atmosphere in the second-stage stretching is preferably 120 to 300°C, more preferably 150 to 240°C. When the temperature of the gas atmosphere and the stretching ratio in the second-stage stretching are in the above ranges, the resulting monofilament tends to be more enhanced in knot strength and transparency.

### (Step of heat-treating stretched filament)

The stretched monofilament obtained in the above step is preferably subjected to heat fixation. The monofilament subjected to two-stage stretching can be subjected to heat fixation in a gas atmosphere at preferably 140 to 260°C, more preferably 150 to 190°C under relaxation at a rate of relaxation of 0 to 15%. In the case of this temperature range, knot strength tends to be more enhanced.

The total stretching ratio of the monofilament obtained in the step of stretching the unstretched monofilament and the step of heat-treating the stretched monofilament is preferably the total stretching ratio of the above stretched monofilament.

The monofilament is useful in use for structures such as filaments, multifilaments and nets for applications of fishery, industry, clothes, medical, artificial grass, cutting components, 3D printers, and the like. The monofilament is preferably used in a fishery application and artificial grass, and is more preferably a fishery material including the monofilament. Examples of the fishery material including the monofilament include a fishery material including the monofilament and fishery members such as a hook and a coloring member which depends on the usage form (for example, dyeing agent). Specific examples of the fishery material including the monofilament include a fishing gut, a fishing net, a squid-fishing line, a main wire and a branch wire of a trawl line, and a sport fishing line.

Examples of the injection-molded article, the extruded article, the blow-molded article or the rotation-molded article include a mechanical component, stationery, piling, a plant pot, a block, a packaging film, a sheet, and a bottle container.

### Examples

Hereinafter, the present invention is described in more detail with reference to Examples and Comparative Examples, but the present invention is not limited by these Examples.

Materials used in Examples are as described below.
Polyamide resin composition (A)
PA6: polyamide 6, manufactured by UBE Corporation, relative viscosity 4.0, terminal amino group concentration 3.3 × 10⁻⁵ eq/g, melting point 218°C, crystallization temperature 171°C, extracted content 8.0% by mass.
PA6/66: polyamide 6/66, manufactured by UBE Corporation, relative viscosity 4.05, terminal amino group concentration 3.3 × 10⁻⁵ eq/g, melting point 190°C, crystallization temperature 132°C.
Heat-resistant agent: product name "Irganox (registered trademark) 245" (hindered phenol-based heat-resistant agent, ethylenebis(oxyethylene)bis[3-(5-tert-butyl-4-hydroxy-m-tolyl)propionate], manufactured by BASF SE).
Lubricant: calcium stearate (St-Ca)
Polyamide-based resin waste material (B-1): pellet manufactured by Refinverse, Inc. The amount of polyethylene terephthalate was analyzed by nuclear magnetic resonance analysis, and as a result, 99.00% by mass of polyamide 6 and 1.00% by mass of polyethylene terephthalate (PET) were comprised in 100% by mass of polyamide-based resin waste material (B-1); melting point 218°C, crystallization temperature 182°C. Polyamide-based resin waste material (B-2): pellet manufactured by Refinverse, Inc. The amount of polyethylene terephthalate was analyzed by nuclear magnetic resonance analysis and the amount of carbon black was analyzed by differential thermal-thermogravimetric simultaneous measurement, and as a result, 98.40% by mass of polyamide 6, 1.00% by mass of polyethylene terephthalate (PET) and 0.60% by mass of carbon black (CB) were comprised in 100% by mass of polyamide-based resin waste material (B-2); melting point 220°C, crystallization temperature 184°C.

### [Measurement]

### <Relative viscosity>

The relative viscosity is a value measured at 25°C in a solution in which 1 g of polyamide is dissolved in 100 ml of 96% concentrated sulfuric acid, according to JIS K6920-2.

### <Terminal amino group concentration>

The concentration was determined by dissolving the polyamide resin in a mixed solvent of phenol and methanol and performing neutralization titration.

### <Tensile strength and tensile elastic modulus>

The denier (d) of the monofilament was determined by defining the weight of 9000 m of the monofilament, as the denier of the monofilament, and in practice, a value obtained by measuring the weight of 90 cm of the monofilament and multiplying this measurement value with 10000 was defined as the denier of the monofilament.

The tensile strength of the monofilament was expressed as a value (unit: gf/d) obtained by using Tensilon RTC-131-A Model manufactured by Orientec Co., Ltd. and dividing the fracture stress (g) during tension under conditions of a distance of chucks of 200 mm and a tensile speed of 200 mm, by the filament diameter (denier).

The tensile elastic modulus of the monofilament was expressed as a value (unit: gf/d) obtained by using Tensilon RTC-131-A Model manufactured by Orientec Co., Ltd. and dividing the elastic modulus (g) during tension under conditions of a distance of chucks of 200 mm and a tensile speed of 200 mm, by the filament diameter (denier).

### <Melting point (Tm) and crystallization temperature (Tc)>

The monofilament of each of Examples and Comparative Examples was subjected to measurement with a differential scanning calorimeter (DSC). The top temperature at an exothermic peak obtained by heating a sample to 280°C under an air atmosphere, retaining the sample at this temperature for 5 minutes, and then dropping the temperature to 0°C at a rate of temperature drop of 20°C/min was defined as the crystallization temperature. Next, the top temperature at an endothermic peak obtained by heating the sample from 0°C to 280°C at a rate of 20°C/min was defined as the melting peak temperature (melting point). Such each crystallization temperature was subtracted from such each melting point, to calculate the difference (Tm - Tc) between the melting point and the crystallization temperature.

### <Extracted content>

10 g of the monofilament (specimen A) of each of Examples and Comparative Examples was boiled together with pure water for 6 hours. Thereafter, the specimen A was dried in vacuum for 16 hours, the mass of the specimen A was then measured, and the content of decreased amount was defined as the amount (g) of a hot-water-soluble component. The extracted content was determined as Extracted content (% by mass) = Amount (g) of hot-water-soluble component/10 (g) × 100.

### [Example 1]

A polyamide resin composition (A-1) was obtained by blending at a compositional ratio shown in Table 1 so that 99.97% by mass of polyamide 6 and 0.03% by mass of the lubricant were achieved. Next, blending was made so that 5% by mass of the polyamide-based resin waste material (B-1) and 95% by mass of the polyamide resin composition (A-1) were achieved, to obtain a recycled polyamide resin composition.

The recycled polyamide resin composition obtained was used to obtain a stretched monofilament by the following production method. An extruder (CS-40-26N, screw diameter 40 mm L/D27) was used for production of an unstretched monofilament. A cylinder portion of the extruder was partitioned into three portions of a first half portion C1, an intermediate portion C2, and a latter half portion C3, and temperature control was performed so that the respective temperatures of the portions C1, C2 and C3 were 255°C, 265°C, and 275°C. An extrusion die portion was partitioned into two portions of a first half portion D1 and a latter half portion D2, and temperature control was performed so that the respective temperatures of the portions D1 and D2 were 250°C and 240°C. The stretching step was performed with one-stage stretching, the stretching ratio was 2.5 times, such stretching was performed in hot water and the temperature here was 95°C, and thus an objective stretched monofilament was obtained.

### [Examples 2 and 3]

Each monofilament was obtained in the same manner as in Example 1 except that the mixing ratio of the polyamide-based resin waste material (B-1) and the polyamide resin composition (A-1) was changed to each compositional ratio shown in Table 1.

### [Example 4]

A monofilament was obtained in the same manner as in Example 1 except that the polyamide-based resin waste material (B-2) was used instead of the polyamide-based resin waste material (B-1).

### [Examples 5 and 6]

Each monofilament was obtained in the same manner as in Example 4 except that the mixing ratio of the polyamide-based resin waste material (B-2) and the polyamide resin composition (A-1) was changed to each compositional ratio shown in Table 1.

### [Comparative Example 1]

A polyamide resin composition (A-1) was obtained by blending at a compositional ratio shown in Table 1 so that 99.97% by mass of polyamide 6 and 0.03% by mass of the lubricant were achieved. The polyamide resin composition (A-1) was used to perform the same method for producing a monofilament as in Example 1, thereby obtaining an objective monofilament.

### [Example 7]

A monofilament was obtained in the same manner as in Example 1 except that a polyamide resin composition (A-2) was obtained by blending at a compositional ratio shown in Table 2 so that 99.96% by mass of polyamide 6/66, 0.03% by mass of the lubricant and 0.01% by mass of the heat-resistant agent were achieved, the polyamide resin composition (A-2) was used instead of the polyamide resin composition (A-1), and blending was made so that 5% by mass of the polyamide-based resin waste material (B-1) and 95% by mass of the polyamide resin composition (A-2) were achieved, to obtain a recycled polyamide resin composition.

### [Examples 8 and 9]

Each monofilament was obtained in the same manner as in Example 7 except that the mixing ratio of the polyamide-based resin waste material (B-1) and the polyamide resin composition (A-2) was changed to each compositional ratio shown in Table 2.

### [Example 10]

A monofilament was obtained in the same manner as in Example 7 except that the polyamide-based resin waste material (B-2) was used instead of the polyamide-based resin waste material (B-1).

### [Examples 11 and 12]

Each monofilament was obtained in the same manner as in Example 10 except that the mixing ratio of the polyamide-based resin waste material (B-2) and the polyamide resin composition (A-2) was changed to each compositional ratio shown in Table 2.

### [Comparative Example 2]

A polyamide resin composition (A-2) was obtained by blending at a compositional ratio shown in Table 2 so that 99.96% by mass of polyamide 6/66, 0.03% by mass of the lubricant and 0.01% by mass of the heat-resistant agent were achieved. The polyamide resin composition (A-2) was used to perform the same method for producing a monofilament as in Example 1, thereby obtaining an objective monofilament.

### [Table 1]

**Table 1**

| | | | | | Comparative Example 1 | Example 1 | Example 2 | Example 3 | Example 4 | Example 5 | Example 6 |
|---|---|---|---|---|---|---|---|---|---|---|---|
| | Polyamide resin composition (A) | | | % by mass/(A)+(B) | 100 | 95 | 90 | 80 | 95 | 90 | 80 |
| | | | | | (A-1) | | | | | | |
| | | Polyamide resin (a) | PA6 | % by mass/(A) | 99.97 | | | | | | |
| | | Lubricant | St-Ca | % by mass/(A) | 0.03 | | | | | | |
| | Polyamide-based resin waste material (B) | | | % by mass/(A)+(B) | 0 | 5 | 10 | 20 | 5 | 10 | 20 |
| | | | | | | (B-1) | | | (B-2) | | |
| | | Polyamide resin (b1) | PA6 | % by mass/(B) | - | 99.00 | | | 98.84 | | |
| | | Thermoplastic resin (b2) | PET | % by mass/(B) | - | 1.00 | | | 1.00 | | |
| Compositional ratio of recycled polyamide resin composition | | Color material | CB | % by mass/(B) | - | - | | | 0.60 | | |
| | Total (A)+(B) | | | % by mass | 100 | 100 | 100 | 100 | 100 | 100 | 100 |
| | b1*100/(a+b1) | Waste material PA/100 parts by mass of total PA | | parts by mass | 0 | 5 | 10 | 20 | 5 | 10 | 20 |
| | b2*100/(a+b1) | Thermoplastic resin/100 parts by mass of total PA | | parts by mass | 0.0 | 0.05 | 0.10 | 0.20 | 0.05 | 0.10 | 0.20 |
| Measurement values | Tensile strength | | | gf/d | 1.9 | 1.9 | 1.9 | 1.9 | 1.9 | 1.9 | 1.9 |
| | Tensile elastic modulus | | | gf/d | 6.4 | 7.5 | 7.6 | 8.7 | 7.0 | 7.5 | 8.0 |
| | Melting point | | Tm | °C | 218 | 218 | 218 | 219 | 216 | 217 | 219 |
| | Crystallization temperature | | Tc | °C | 171 | 180 | 180 | 181 | 181 | 182 | 182 |
| | Difference between melting point and crystallization temperature | | Tm-Tc | °C | 47 | 39 | 38 | 38 | 35 | 35 | 37 |
| | Extracted content | | | % by mass | 8.0 | 7.0 | 6.8 | 6.0 | 7.0 | 6.8 | 5.9 |

### [Table 2]

**Table 2**

| | | | | | Comparative Example 2 | Example 7 | Example 8 | Example 9 | Example 10 | Example 11 | Example 12 |
|---|---|---|---|---|---|---|---|---|---|---|---|
| | Polyamide resin composition (A) | | | % by mass/(A)+(B) | 100 | 95 | 90 | 80 | 95 | 90 | 80 |
| | | | | | (A-2) | | | | | | |
| | | Polyamide resin (a) | PA6/66 | % by mass/(A) | 99.96 | | | | | | |
| | | Lubricant | St-Ca | % by mass/(A) | 0.03 | | | | | | |
| | | Heat-resistant agent | Irganox 245 | % by mass/(A) | 0.01 | | | | | | |
| | Polyamide-based resin waste material (B) | | | % by mass/(A)+(B) | 0 | 5 | 10 | 20 | 5 | 10 | 20 |
| Compositional ratio of recycled polyamide resin composition | | | | | | (B-1) | | | (B-2) | | |
| | | Polyamide resin (b1) | PA6 | % by mass/(B) | - | 99.00 | | | 98.84 | | |
| | | Thermoplastic resin (b2) | PET | % by mass/(B) | - | 1.00 | | | 1.00 | | |
| | | Color material | CB | % by mass/(B) | - | - | | | 0.60 | | |
| | Total (A)+(B) | | | % by mass | 100 | 100 | 100 | 100 | 100 | 100 | 100 |
| | b1*100/(a+b1) | Waste material PA/100 parts by mass of total PA | | parts by mass | 0 | 5 | 10 | 20 | 5 | 10 | 20 |
| | 52*100/(a+b1) | Thermoplastic resin/100 parts by mass of total PA | | parts by mass | 0.0 | 0.05 | 0.10 | 0.20 | 0.05 | 0.10 | 0.20 |
| Measurement values | Tensile strength | | | gf/d | 2.0 | 1.7 | 2.0 | 1.8 | 1.5 | 1.4 | 1.4 |
| | Tensile elastic modulus | | | gf/d | 5.1 | 7.6 | 8.5 | 10.1 | 7.5 | 8.1 | 8.7 |
| | Melting point | | Tm | °C | 190 | 189 | 189 | 195 | 190 | 191 | 197 |
| | Crystallization temperature | | Tc | °C | 132 | 147 | 150 | 156 | 151 | 153 | 158 |
| | Difference between melting point and crystallization temperature | | Tm-Tc | °C | 58 | 41 | 39 | 39 | 39 | 37 | 38 |
| | Extracted content | | | % by mass | 3.9 | 3.7 | 3.5 | 2.5 | 3.8 | 3.6 | 3.1 |

In Examples 1 to 6, the tensile strength comparable with that in Comparative Example 1 where no polyamide-based resin waste material (B) was comprised was retained and the tensile elastic modulus was enhanced as compared with that in Comparative Example 1. As the proportion of the polyamide-based resin waste material (B) in the recycled polyamide resin composition was increased, the tensile elastic modulus was enhanced. Furthermore, it could be said that, in Examples 1 to 6, the polyamide-based resin waste material (B) was comprised and thus the difference between the melting point and the crystallization temperature was smaller than that in Comparative Example 1 to impart excellent moldability and allow for easy crystallization. In addition, it could be said that, in Examples 1 to 6, the low-molecular weight component of the extracted content was comprised to impart flexibility and hardly cause fracture.

In Examples 7 to 12, the tensile elastic modulus was remarkably enhanced as compared with Comparative Example 2 where no polyamide-based resin waste material (B) was comprised. As the proportion of the polyamide-based resin waste material (B) in the recycled polyamide resin composition was increased, the tensile elastic modulus was enhanced. Furthermore, it could be said that, in Examples 7 to 12, the polyamide-based resin waste material (B) was comprised and thus the difference between the melting point and the crystallization temperature was smaller than that in Comparative Example 2, to impart excellent moldability and allow for easy crystallization. In addition, it could be said that, in Examples 7 to 12, the low-molecular weight component of the extracted content was comprised to impart flexibility and hardly cause fracture.

Thus, according to the present invention, the content of a polyamide-based resin waste material (B) in the recycled polyamide resin composition and the content of a thermoplastic resin (b2) other than a polyamide resin in the polyamide-based resin waste material (B) are set in specified ranges, not only can maintain tensile strength comparable with that of a polyamide resin composition comprising no waste material, but also can be enhanced in tensile elastic modulus.

### Industrial Applicability

The recycled polyamide resin composition can be suitably used for production of a monofilament, an injection-molded article by injection molding, an extruded article by extrusion, a blow-molded article by blow molding, or a rotation-molded article by rotational molding.

## Claims

1. A recycled polyamide resin composition obtained by melt-kneading a polyamide resin (a) or a polyamide resin composition (A) containing the polyamide resin (a) as a main component, and a polyamide-based resin waste material (B), wherein
the polyamide-based resin waste material (B) comprises a polyamide resin (b1) and a thermoplastic resin (b2) other than a polyamide resin,
more than 0% by mass and 2.00% by mass or less of the thermoplastic resin (b2) other than a polyamide resin is comprised in 100% by mass of the polyamide-based resin waste material (B), and
2% by mass or more and less than 50% by mass of the polyamide-based resin waste material (B) is comprised in 100% by mass of the recycled polyamide resin composition.

2. The recycled polyamide resin composition according to claim 1, wherein, in a case where a total amount of the polyamide resin (a) and the polyamide resin (b1) is 100 parts by mass, a content of the polyamide resin (b1) is 5 parts by mass or more.

3. The recycled polyamide resin composition according to claim 1, wherein, in a case where a total amount of the polyamide resin (a) and the polyamide resin (b1) is 100 parts by mass, a content of the thermoplastic resin (b2) other than a polyamide resin is 0.05 parts by mass or more.

4. The recycled polyamide resin composition according to claim 1, wherein, in a case where a total amount of the polyamide resin (a) and the polyamide resin (b1) is 100 parts by mass, a content of the polyamide resin (b1) is 5 parts by mass or more and a content of the thermoplastic resin (b2) other than a polyamide resin is 0.05 parts by mass or more.

5. The recycled polyamide resin composition according to claim 1, wherein the thermoplastic resin (b2) other than a polyamide resin is at least one selected from the group consisting of a polyester resin, a polyolefin resin and polyvinyl alcohol.

6. The recycled polyamide resin composition according to claim 1, wherein the polyamide resin (a) or the polyamide resin composition (A) containing the polyamide resin (a) as a main component is the polyamide resin composition (A) containing the polyamide resin (a) as a main component and comprises at least one selected from the group consisting of a lubricant and a heat-resistant agent.

7. The recycled polyamide resin composition according to claim 1, wherein the polyamide-based resin waste material (B) comprises a color material.

8. The recycled polyamide resin composition according to claim 1, wherein the polyamide resin (a) or the polyamide resin (a) in the polyamide resin composition (A) containing the polyamide resin (a) as a main component comprises at least one selected from the group consisting of polyamide 4, polyamide 46, polyamide 410, polyamide 56, polyamide 510, polyamide 512, polyamide 6, polyamide 66, polyamide 610, polyamide 612, polyamide 1010, polyamide 1012, polyamide 11, polyamide 12, polyamide 6/66, polyamide 6/12 and polyamide 6/66/12.

9. The recycled polyamide resin composition according to claim 1, wherein the polyamide resin (a) or the polyamide resin (a) in the polyamide resin composition (A) containing the polyamide resin (a) as a main component is an aliphatic homopolyamide resin.

10. The recycled polyamide resin composition according to claim 1, wherein the polyamide resin (a) or the polyamide resin (a) in the polyamide resin composition (A) containing the polyamide resin (a) as a main component is an aliphatic copolymerized polyamide resin.

11. The recycled polyamide resin composition according to claim 1, wherein the polyamide resin (b1) is an aliphatic homopolyamide resin.

12. The recycled polyamide resin composition according to claim 1, wherein the polyamide-based resin waste material (B) is a waste material of monofilaments.

13. The recycled polyamide resin composition according to claim 1, wherein a difference (Tm - Tc) between a melting point and a crystallization temperature, as measured with a differential scanning calorimeter (DSC), is 10 to 45°C.

14. The recycled polyamide resin composition according to claim 1, wherein an extracted content in boiling together with pure water for 6 hours is 0.5 to 7.5% by mass.

15. A molded article of the recycled polyamide resin composition according to any one of claims 1 to 14.

16. The molded article according to claim 15, wherein the molded article is a monofilament.

17. A method for producing a recycled polyamide resin composition by melt-kneading a polyamide resin (a) or a polyamide resin composition (A) containing the polyamide resin (a) as a main component, and a polyamide-based resin waste material (B), wherein
the polyamide-based resin waste material (B) comprises a polyamide resin (b1) and a thermoplastic resin (b2) other than a polyamide resin,
more than 0% by mass and 2.00% by mass or less of the thermoplastic resin (b2) other than a polyamide resin is comprised in 100% by mass of the polyamide-based resin waste material (B), and
2% by mass or more and less than 50% by mass of the polyamide-based resin waste material (B) is comprised in 100% by mass of the recycled polyamide resin composition.

18. The method for producing a recycled polyamide resin composition according to claim 17, comprising
Step 1 of pulverizing the polyamide-based resin waste material (B),
Step 2 of adding and mixing the polyamide resin (a) or the polyamide resin composition (A) containing the polyamide resin (a) as a main component to and with the pulverized polyamide-based resin waste material (B) obtained in Step 1, and
Step 3 of melt-kneading the mixture obtained in Step 2, to obtain a pellet.
